# EUROPEAN PATENT SPECIFICATION

(11) **EP 1 193 939 B1**
(45) Date of publication and mention of the grant of the patent: **30.08.2006**
(21) Application number: 01101725.8
(22) Date of filing: 25.01.2001
(51) Int. Cl.: H04L 29/06, G06F 17/30

(54) **Client server network**
Client - Server Netzwerk
Réseau client serveur

(30) Priority: 03.08.2000 JP 2000235710
(43) Date of publication of application: 03.04.2002
(73) Proprietor: FUJITSU LIMITED, Kawasaki-shi, Kanagawa 211-8588 (JP)
(72) Inventor: Akasaka, Kazuhiko, Kawasaki-shi, Kanagawa 211-8588 (JP); Oka, Toshio, Kawasaki-shi, Kanagawa 211-8588 (JP); Hashimoto, Nobuyuki, Kawasaki-shi, Kanagawa 211-8588 (JP)
(74) Representative: Körfer, Thomas

(56) References cited:
- WO-A-99/00958
- US-A- 5 727 156
- US-A- 5 793 966
- US-A- 6 026 433
- SCHNEIER B: "Applied Cryptography, Protocols, Algorithms, and Source Code in C" , APPLIED CRYPTOGRAPHY. PROTOCOLS, ALGORITHMS, AND SOURCE CODE IN C, NEW YORK, JOHN WILEY & SONS, US, PAGE(S) 47-65,566-572 XP002230276 ISBN: 0-471-11709-9 * page 567; figure 24.1 * * page 569 - page 570 *

## Description

### BACKGROUND OF THE INVENTION

### Field of the Invention

The present invention relates to a network system comprising a client and a server, a client, a server, and a recording medium and, more particularly, to a network system, a client, a server, and a recording medium, in which connection information necessary for connection from a client to a server can be automatically set.

### Description of the Related Arts

Hitherto, when a file is transferred to a homepage area of the user located on a server of a network and publicized, the user first logs in the server by using an account and a password from a client. At that time, in the case where a homepage is not established yet, prior to the server log-in, the user takes a procedure for establishing the homepage area for an administrator of the server, for example, a network provider. As set information necessary to transfer a file in accordance with a file transfer protocol (FTP protocol), generally, the user sets an FTP server name, an FTP account, an FTP password, and the like notified from the server administrator and executes the file transfer.

However, it is difficult for the user to understand the procedure for establishing the homepage area and file transfer protocol information such as URL of the homepage, URL of self-creation CGI of the user, FTP server name, FTP account, FTP password, and the like which are preliminarily notified and used for accessing to the network server. To access to the server on the network, however, it is necessary to correctly input such information. Accordingly, there is such a possibility that it takes troublesomeness and time to input and an erroneous input occurs. There is such a problem that when an error occurs, for example, in case of the erroneous input, since an amount of information is large, it is hard to find the error and it is difficult to analyze its causes.

US 5 727 156 discloses a simple method and apparatus for posting hypertext documents to a hypertext server so as to make the hypertext documents accessible to users of the hypertext document system while securing against unauthorized modification of the posted hypertext documents.

### SUMMARY OF THE INVENTION

The invention is directed to a network system as set out in claim 1, a client as set out in claim 10, a server as set out in claim 16, a recording medium which stores a program which is executed by a computer that is connectable to a server through a network as set out in claim 22, a recording medium which stores a program which is executed by a computer that is connectable to a client through a network as set out in claim 28, a processing method of a client as set out in claim 35 and a processing method of a server as set out in claim 41.

According to the invention, a network system, a client, a server, and a recording medium, in which a file can be transferred to a homepage area or the like and simply and easily publicized without needing to set information by the user are provided.

### (Network system)

According to the invention, there is provided a network system constructed by a client and a server, comprising: a set information obtaining unit which is provided for the client, requests connection information to the server by an information obtaining request using user identification (ID) information, and sets the connection information which is received as a response; and a set information providing unit which is provided for the server and transmits the connection information received from the client and obtained by using the user ID information to the client. In this case, the connection information is information which is used when a file is transferred from the client to the server. If a connection to the network is a dial-up connection, the set information obtaining unit of the client obtains the user ID information which is used for the information obtaining request from the setting input of the dial-up connection. When the connection to the network is other than the dial-up connection, the set information obtaining unit of the client uses the user ID information inputted from the user as an information obtaining request.
Consequently, when there is a setting input of, for example, the dial-up connection to the server to which the user has been registered, the user ID information such as account, password, and the like is obtained from the setting of the dial-up connection in response to the connecting request of the file transfer of the user and sent to the server and connection information such as a file transfer protocol or the like can be automatically obtained and set. The registered user of the server does not need to set and input the connection information such as a file transfer protocol. The file transfer to establish or update the homepage can be simply and easily performed.

The set information obtaining unit of the client recognizes a fact that the user is a registered user of the server from a set mail address and, after that, issues the information obtaining request using the user ID information. Accordingly, when transferring a file, the user does not need to perform a special operation with respect to the confirmation of the user registration to the server and a fact that he is a server registered user, namely, a subscriber of the provider can be confirmed on the client side from the mail address of the user. The server provides a service for establishing a homepage. When the information obtaining request from the client is received, the server performs an establishing process of the homepage by using the user ID information and, after that, transmits the requested information to the client. Therefore, merely by designating a file to be publicized to the homepage on the client from the user, without needing the operation such as a homepage establishing request or the like to the server, if a homepage is not established yet, a homepage is automatically established on the server side and it is possible to transfer the file to the homepage and publicize it. When the server receives the information obtaining request from the client, in the case where the homepage corresponding to the user specified by the user ID information is not established yet, the server performs the establishing process. The homepage establishing service of the server is provided to the registered user. The client has a transfer processing unit for transferring the file to the server. When the file is designated and the transmitting operation is performed, the client activates the set information obtaining unit, obtains the connection information from the server, and transfers the file by the transfer processing unit. Between the set information obtaining unit of the client and the connection information providing unit of the server, the obtaining request of the connection information and its response are processed by a protocol having a security function.
The user ID information is constructed by an account name and a password.

### (Client)

According to the invention, a client which is connected to the server through a network is provided. The client has a set information obtaining unit requests connection information to the server by an information obtaining request using user ID information and sets the connection information which is received from the server as a response to the request. The connection information is information which is used when the file is transferred from the client to the server. When the connection to the network is a dial-up connection, the set information obtaining unit obtains the user ID information which is used for the information obtaining request from the setting input of the dial-up connection. When the connection to the network is other than the dial-up connection, the set information obtaining unit uses the user ID information inputted from the user as an information obtaining request. The set information obtaining unit recognizes a fact that the user is the registered user of the server from the set mail address and, after that, issues the information obtaining request using the user ID information. The client further has a transfer processing unit which transfers the file to the server. When the file is designated and the transmitting operation is performed, the client activates the set information obtaining unit, obtains the connection information from the server, and transfers the file by the transfer processing unit. The set information obtaining unit processes the reception of the obtaining request and the connection information from the server by a protocol having a security function. The user ID information is constructed by an account name and a password.

### (Server)

According to the invention, a server which is connected to a client through a network is provided. The server according to the invention has a set information providing unit which receives the information obtaining request from the client and transmits the connection information that is obtained by using the received user ID information and should be set by the client to the client. The connection information is information which is used when the file is transferred from the client. The server provides a service for establishing a homepage. When the information obtaining request from the client is received, the server performs a process for establishing the homepage by using the user ID information and, after that, transmits the requested information to the client. When the server receives the information obtaining request from the client, in the case where the homepage corresponding to the user specified by the user ID information is not established yet, the server executes the establishing process. The homepage establishing service of the server is provided to the registered user. The set information providing unit of the server processes the reception of the obtaining request from the client and the transmission of the connection information to the client by a protocol having a security function. The user ID information is constructed by an account name and a password.

### (Recording medium)

According to the invention, there is provided a computer-readable recording medium which records a program (program for a server) for allowing a computer connected to a server through a network to request connection information to the server by an information obtaining request using user identification (ID) information and set the connection information received from the server as a response to such a request. The connection information in the recording medium is information which is used when a file is transferred to the server. When the computer uses a dial-up connection for the connection to the network, the program in the recording medium allows the computer to execute the operation for obtaining the user ID information which is used for the information obtaining request from a setting input of the dial-up connection.

When the computer uses a connection other than the dial-up connection for the connection to the network, the program in the recording medium allows the computer to execute the operation for using the user ID information inputted from the user for the information obtaining request. The program in the recording medium allows the computer to execute the operation for recognizing a fact that the user is a registered user of the server from a set mail address and, after that, issuing the information obtaining request using the user ID information. When a file is designated and the transmitting operation is performed, the program in the recording medium allows the computer to execute the operation for requesting the connection information to the server, obtaining the connection information received from the server, and transferring the file.
The program in the recording medium allows the computer to execute the operation for processing the reception of the obtaining request and the connection information from the server by a protocol having a security function. The user ID information is constructed by an account name and a password.

According to the invention, there is provided a computer-readable recording medium which records a program (program for a server) for allowing a computer connected to a client through a network to receive an information obtaining request from the client, receive user identification (ID) information from the client, and transmit connection information which is obtained by using the user ID information and which should be set by the client to the client. In this case, the connection information is information which is used when a file is transferred from the client. When a homepage establishing service is provided through the computer and the information obtaining request is received from the client, the program in the recording medium allows the computer to execute the operation for performing a homepage establishing process by using the user ID information and transmit the requested information to the client. When the information obtaining request is received from the client, in the case where a homepage corresponding to the user specified by the user ID information is not established yet, the program in the recording medium allows the computer to execute the operation for performing an establishing process. A homepage establishing service is provided to the registered user. The program in the recording medium allows the computer to execute the operation for processing the reception of the obtaining request from the client and the transmission of the connection information to the client by a protocol having a security function. In this case, the user ID information is constructed by an account name and a password.

The invention provides a processing method of a client who is connected to a server through a network, wherein connection information is requested to the server by an information obtaining request using user identification information, and connection information which is received from the server is set as its response.

The invention further provides a processing method of a server which is connected to a client through a network, comprising the steps of: receiving an information obtaining request from the client; receiving user identification information from the client; and transmitting connecton information that is obtained by using the user identification information and should be set by the client to the client.

The above and other objects, features, and advantages of the present invention will become more apparent from the following detailed description with reference to the drawings.

### BRIEF DESCRIPTION OF THE DRAWINGS

Fig. 1 is a block diagram of a construction of functions of a client and a server according to the invention;
Figs. 2A and 2B are time charts for processes of the client and server for obtaining FTP connection information according to the invention;
Figs. 3A and 3B are transition explanatory diagrams of a client processing picture plane in case of publicizing a file to a homepage;
Figs. 4A to 4D are transition explanatory diagrams of a client processing picture plane in case of obtaining the FTP connection information according to the invention;
Fig. 5 is an explanatory diagram of the FTP connection information automatically obtained from the server;
Fig. 6 is a flowchart for the processes of the client in Fig. 1; and
Fig. 7 is a flowchart for the processes of the server in Fig. 1.

### DETAILED DESCRIPTION OF THE PREFERRED EMBODIMENT

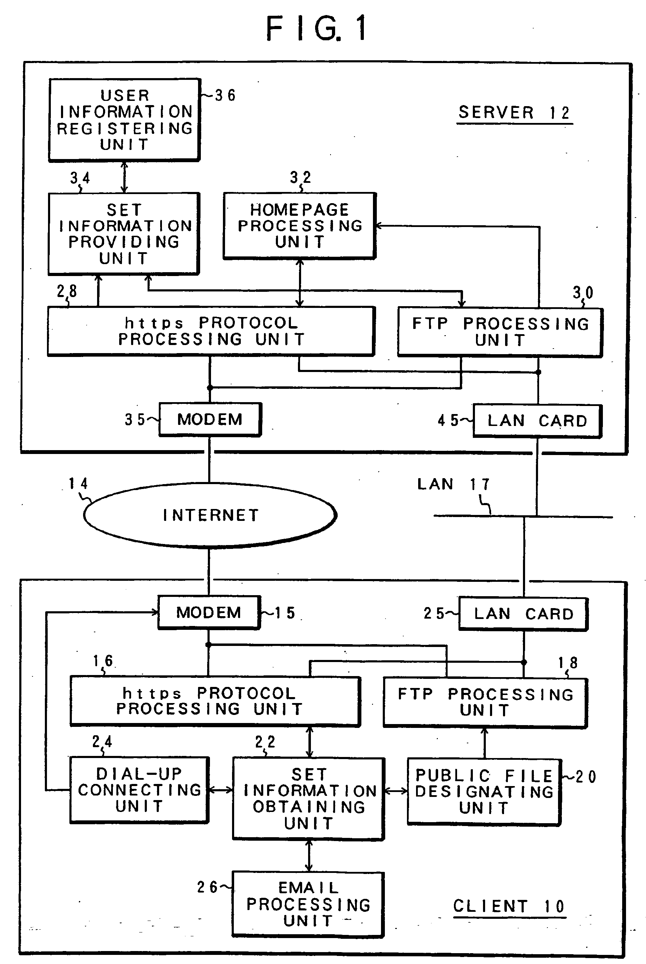

Fig. 1 is a block diagram showing a construction of functions of a client and a server in a network system according to the invention. The network system of the invention is constructed by a client 10 and a server 12 which are connected through an Internet 14. A software function for realizing as a provider in which the client 10 is registered as a user and which provides various Internet using services is arranged on the server 12 side. The client 10 has: an https protocol processing unit 16; an FTP (file transfer protocol) processing unit 18; a public file designating unit 20; a set information obtaining unit 22; a dial-up connecting unit 24; and an Email processing unit 26. It will be obviously understood that in addition to them, the client 10 has a function as a WWW browser (not shown). The set information obtaining unit 22 provided for the client 10 is provided for the public file designating unit 20, a homepage processing unit 32, a set information providing unit 34, and a user information registering unit 36. The client 10 and server 12 are connected by either a dial-up connection via the Internet 14 by modems 15 and 35 or a connection by an LAN 17 using LAN cards 25 and 45 such as Ethernet or the like. In the public file designating unit 20 of the client 10, the user transmits a public file to the server 12 and performs a designation for publicizing it by a homepage. When the user designates the public file and performs the transmitting operation to the public file designating unit 20, the dial-up connecting unit 24 is activated. When the user enters an account name (user ID) and a password, a connection between the https protocol processing unit 16 of the client 10 and an https protocol processing unit 28 of the server 12 is established through the Internet 14. When such a dial-up connection is completed, the set information obtaining unit 22 of the client 10 refers to a mail address in the Email processing unit 26 and recognizes whether the user has been registered as a subscriber of the provider using the server 12 or not from, for example, the mail address such as account, domain, or the like. When it is confirmed that the user has been registered, the client requests the server 12 to obtain connection information by the FTP processing unit 18. At this time, the set information obtaining unit 22 refers to the dial-up connecting unit 24, obtains the account name and password of the user from the setting input, and transmits an obtaining request of the FTP connection information to the server 12 by adding the account name and password to it. The obtaining request of the FTP connection information from the client 10 is received by the https protocol processing unit 28 of the server 12 and sent to the set information providing unit 34. The set information providing unit 34 checks the account name and password from the client 10 by referring to the user information registering unit 36, thereby confirming that the user who requested to obtain the set information has already been registered as a user. When the password coincides, information necessary for setting the FTP connection information from the client 10 is obtained from an FTP processing unit 30 and provided to the client 10 from the https protocol processing unit 28 through the Internet 14. Information such as account name, password, and the like regarding the user as a subscriber has been registered in the user information registering unit 36 by the provider. When the necessary information is received by the obtaining request to the server 12 as mentioned above, the set information obtaining unit 22 automatically sets the FTP connection information from the obtained information and establishes the connection with the FTP processing unit 30 of the server 12 by the FTP processing unit 18 through the Internet 14. When the connection between the FTP processing units 18 and 30 of the client 10 and server 12 is established through the Internet 14, the public file designated by the user by the file designating unit 20 is transferred to the server 12 in accordance with a file transfer protocol (FTP), received by the FTP processing unit 30, and sent to the homepage processing unit 32. When the set information obtaining request using the account name and password is received from the set information obtaining unit 22 of the client, the set information providing unit 34 of the server 12 refers to the homepage processing unit 32 and discriminates whether a homepage of the user corresponding to the account name has been established or not. If the homepage is not established, the homepage is automatically established and, after that, information for FTP connection newly formed is transmitted from the FTP processing unit 30 to the client 10 side. Therefore, when the client 10 transfers the public file from the FTP processing unit 18 to the server 12 by the automatic setting of the FTP connection information obtained from the server 12, since the server 12 side is in a state where the homepage has already been established, by storing the received public file into a folder corresponding to the homepage which has already been established, the homepage can be publicized at the normal end of the file transfer. Naturally, if the homepage has already been publicized, the homepage is updated by transferring the file which has the same name and has already been stored in the server 12.

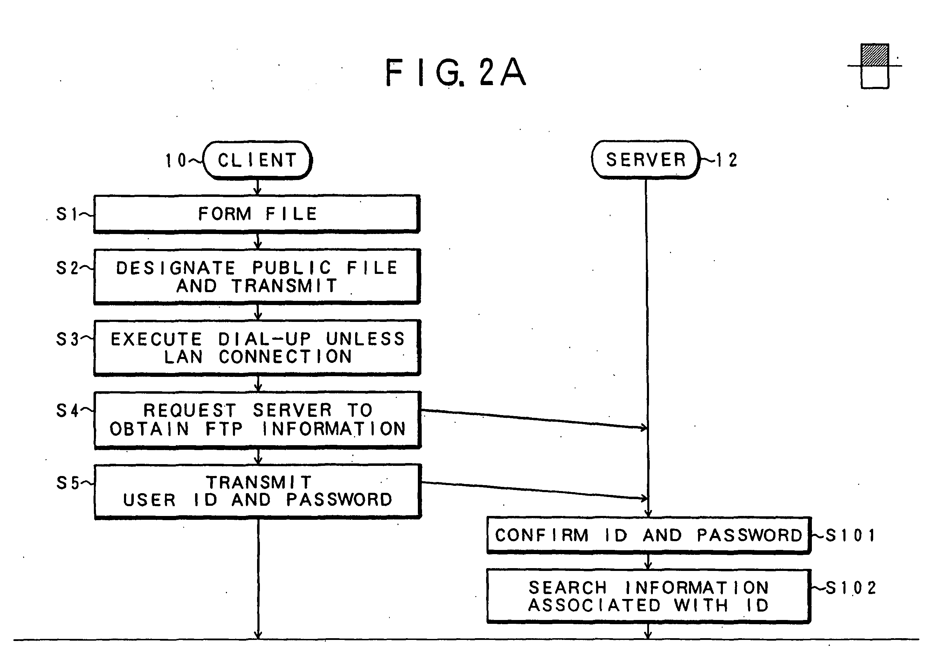

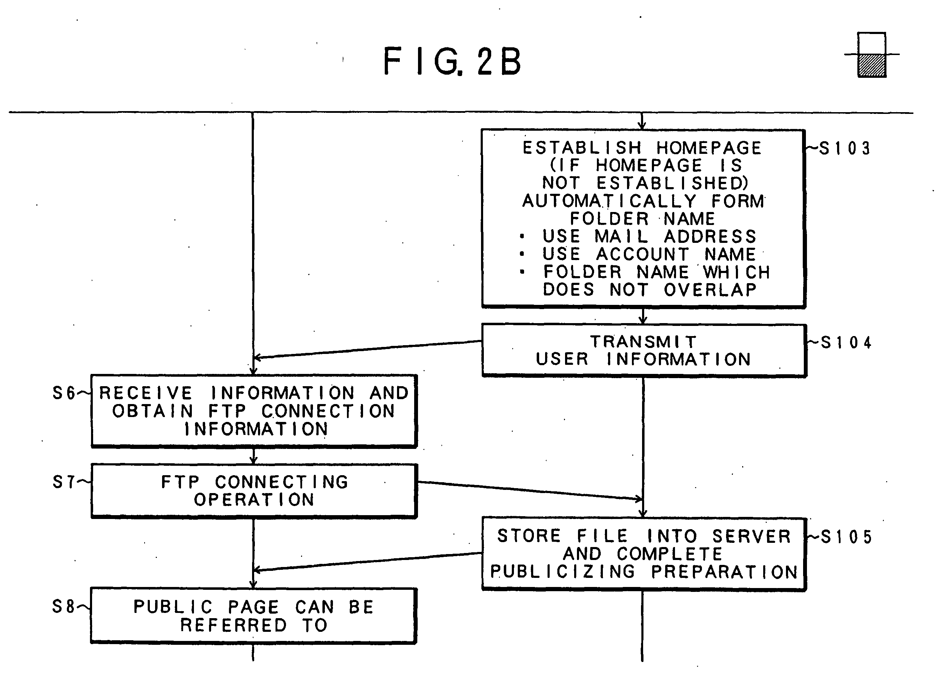

Figs. 2A and 2B are time charts for the processing operation for obtaining the FTP connection information at the time of publicizing a file to the homepage in the network system of Fig. 1. First, in step S1, the client 10 forms a file to be publicized to the homepage of the server 12, for example, an HTML file by an arbitrary application on the client 10. When the file formation is completed, the file to be publicized is designated by the public file designating unit 20 and the transmitting operation is performed in step S2. In response to the designation of the public file and the transmitting operation, in step S3, if the connection of the client 10 to the server 12 is not the LAN connection as shown in Figs. 2A and 2B, the user enters the account name (user ID) and password, executes the dial-up connection by the dial-up connecting unit 24, and establishes the connection between the https protocol processing unit 16 of the client 10 and the https protocol processing unit 28 of the server 12. Subsequently, in step S4, by activating the set information obtaining unit 22, the client requests the server 12 to obtain information necessary for setting the FTP connection information. Further, in step S5, the account name as a user ID and the password are obtained from the setting input of the dial-up connecting unit 24 and transmitted to the server 12.
For example, assuming that an address of the server 12 is set to "www.aaa.co.jp" and a storing folder of CGI is set to "cgi-bin", the obtaining request of the FTP connection information to the server 12 in step S4 is executed as follows. A "GetData.cgi" file is a program for performing both the transmitting process of the requested FTP connection information and the homepage establishing process. First, in step S4, the server having the address "www.aaa.co.jp" is searched, communication is started by the https protocol, and it is requested to open the file of "cgi-bin/Getdata.cgi" in this communicating state. In the server 12, an instruction to open a "GetData.cgi" file from the client 10 is received, the "GetData.cgi" file is executed because a file extension is cgi, processes, which will be explained hereinlater, are executed, and a processing result is returned to the client 10.
Further, with respect to the transmission of the user ID and password in step S5, it means that a header of "Authorization:Basic user:password" is additionally transmitted when it is mentioned as a command. In an example which will be explained later, "abc123456" is set as "user" and "aaabbbccc" is set as "password".
With respect to a portion of "user:password" in the additional transmission of the header, a binary format is once converted (encoded) into a text format and transmitted, and a decoding for returning it to the original format is performed on the reception side.
For example, BASE64 is used as an encoding. In response to the obtaining request of the FTP connection information and the transmission of the user ID and password in steps S4 and S5 in the client 10, the server 12 confirms the user ID and password from the client in step S101. That is, the server 12 refers to the user information registering unit 36, recognizes that the user is a registered subscriber of the provider which manages the server 12 from the account name, and recognizes the coincidence of the password. Subsequently, in step S102, a search of the information necessary for setting the FTP connection information associated with the account name as a user ID is performed to the user information registering unit 36.
In step S103, if the homepage is not established yet, the homepage is newly established. In the establishment of the homepage, a folder name unconditionally corresponding to the user is automatically formed. Upon automatic formation of the folder name, a mail address is used or the account name is used and, further, a folder name which does not overlap is formed and its folder information is also stored in the user information registering unit 36. In step S104, user information necessary for setting the FTP connection information is read out from the user information registering unit 36 and transmitted to the client 10. The client 10 receives the user information from the server 12 and sets the FTP connection information in step S6 and executes the FTP connecting operation in step S7. The client 10 transfers the designated public file to the server 12 in accordance with a file transfer protocol (FTP), stores the file into the server 12 and completes a publicizing preparation in step S105. When the file is stored in the server 12, the client 10 confirms whether the public page can be referred to or not in step S8 in response to the completion of the file storage and finishes the series of file transfer and publicizing processes.

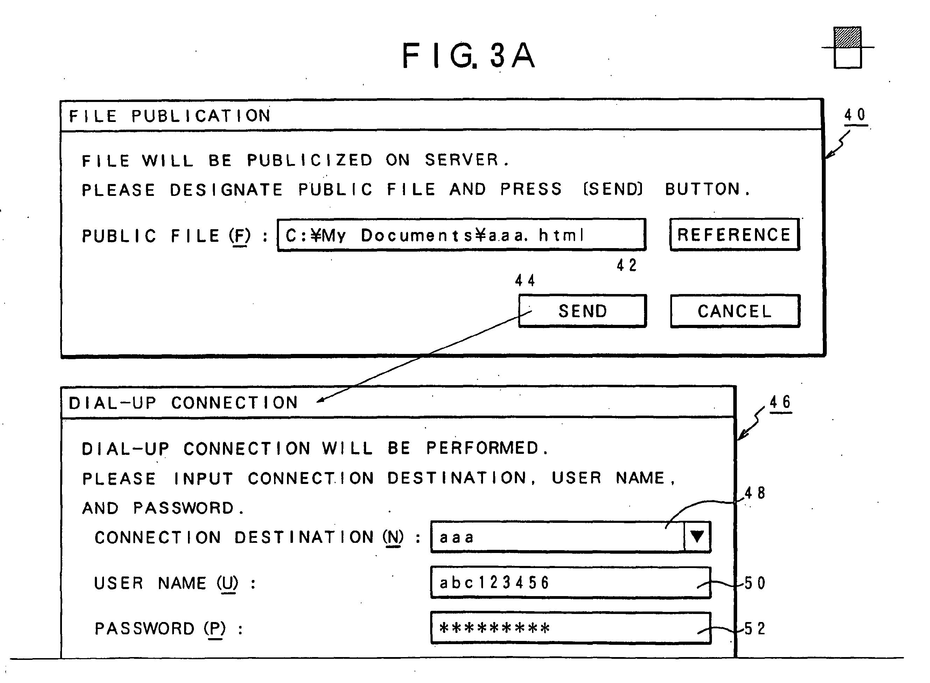

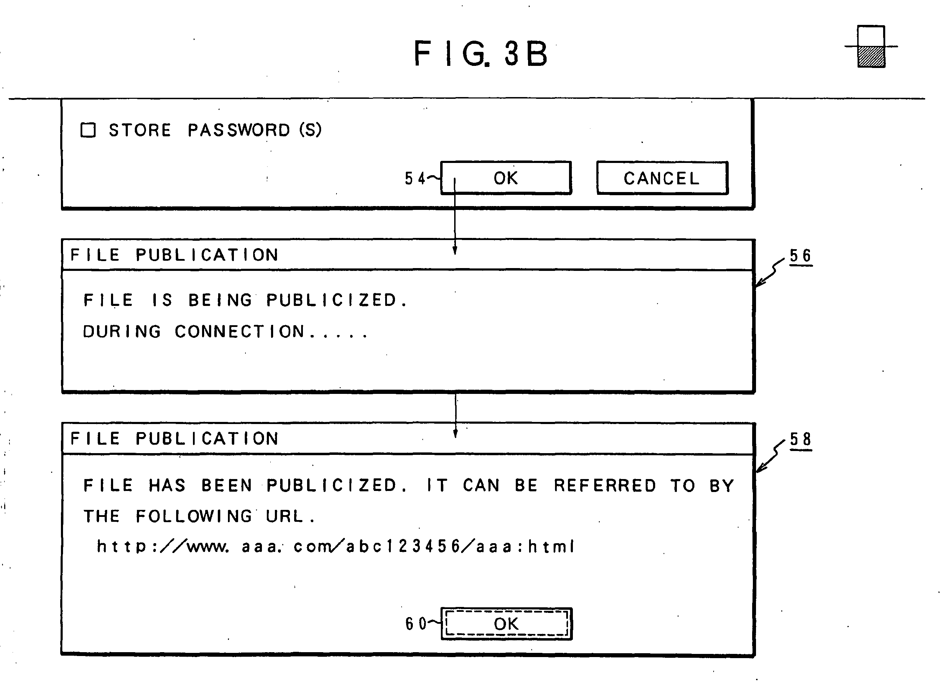

Figs. 3A and 3B are explanatory diagrams showing a transition of a processing picture plane on the client 10 side in the transferring process between the client and the server in Figs. 2A and 2B. First, a file public picture plane 40 is opened to designate a file to be publicized. A public file designating column 42 is provided for the file public picture plane 40. In this example, "C:¥My Documents¥aaa.html" is designated as a file name which is publicized. When a SEND button 44 is pressed in such a state where the public file name has been designated, the screen is switched to a next dial-up connecting picture plane 46. In the dial-up connection, the user selects a dial-up connection set name "aaa" as a connection destination 48, enters, for example, an account name "abc123456" as a user name 50, and further, enters, "aaabbbccc" as a password 52. However, it is displayed as "*********" lest the other user finds out the password even if he uses the client. If the user set and entered the connection destination, user name, and password with respect to the dial-up connecting picture plane 46, the dial-up connection is executed by operating an OK button 54. After that, with respect to the processes in steps S4 to S7 of the client 10 in Figs. 2A and 2B, a transition picture plane is not displayed but a next public file transfer picture plane 56 is displayed and its transfer sequence is not particularly presented to the user. When the preparation of the file publication on the server homepage is completed by the file transfer based on FTP, the screen is switched to a next file publication completion picture plane 58. By operating an OK button 60, a series of file publicizing processes is finished.

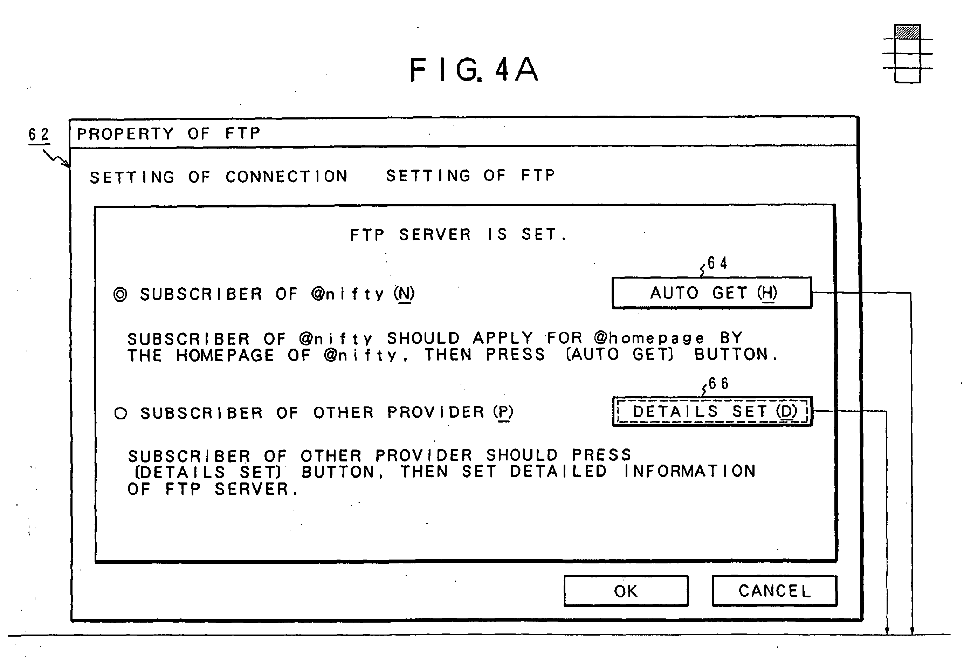

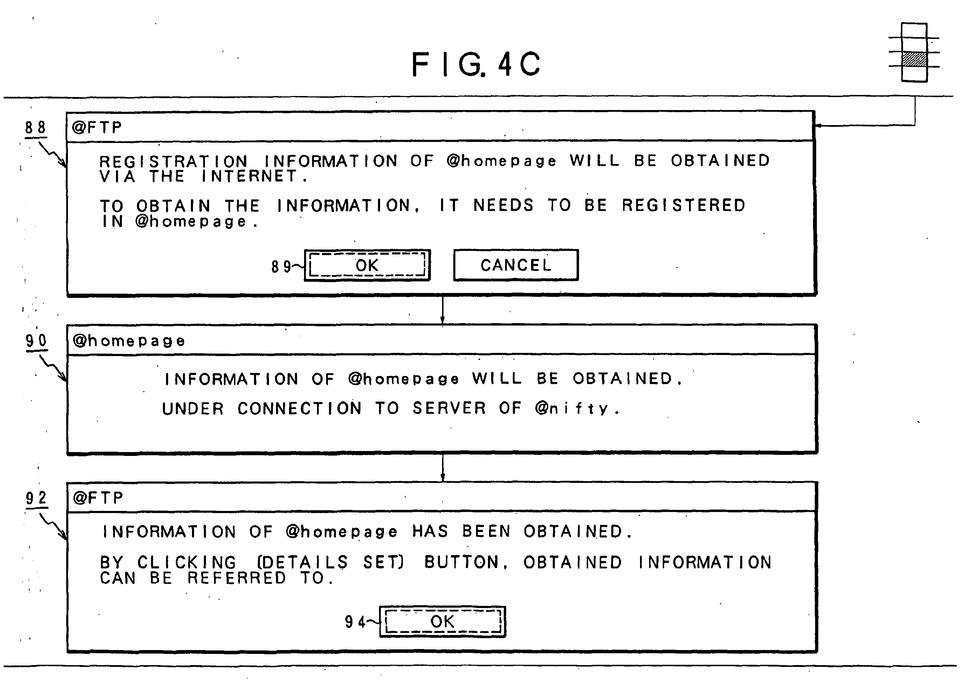

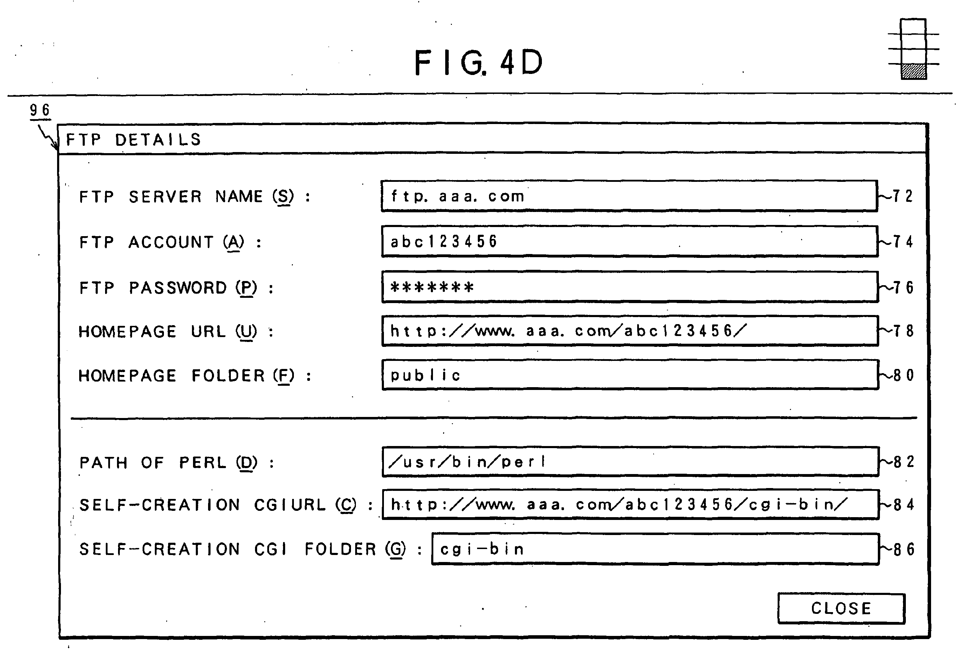

Figs. 4A to 4D are explanatory diagrams of a picture plane transition showing a state where the FTP connection information is obtained from the FTP property picture plane. Although Figs. 3A and 3B show that the automatic obtaining process of the FTP connection information is started by the operation for transmitting the public file to the server 12, Figs. 4A to 4D differ from Figs. 3A and 3B with respect to a point that the automatic obtaining process of the FTP connection information is started by the user setting operation.

A first FTP property picture plane 62 in Figs. 4A to 4D is a processing picture plane for selecting a setting method of the FTP connection information. In case of the subscriber of the provider which manages the server 12 for executing the processes of the invention, a check box corresponding to the provider subscriber between the two check boxes showing the kind of subscriber is selected. By this selection, the provider registered subscriber is confirmed from the mail address or the like. When it is confirmed that the user is the provider registered subscriber, an AUTO GET button 64 can be selected. A DETAILS SET button 66 is a button for displaying the FTP connection information. By selecting the button 66, the FTP connection information which has been set at present as an FTP detailed setting picture plane 70 is displayed. In case of a subscriber of a provider other than the provider which enables the processes of the invention to be executed, it is necessary to select the check box corresponding to the other provider subscriber and perform the operation to manually input the FTP connection information on the FTP detailed setting picture plane 70 which is displayed by operating the DETAILS SET button 66. As shown on the FTP detailed setting picture plane 70, the FTP set information is not set in the initial state.

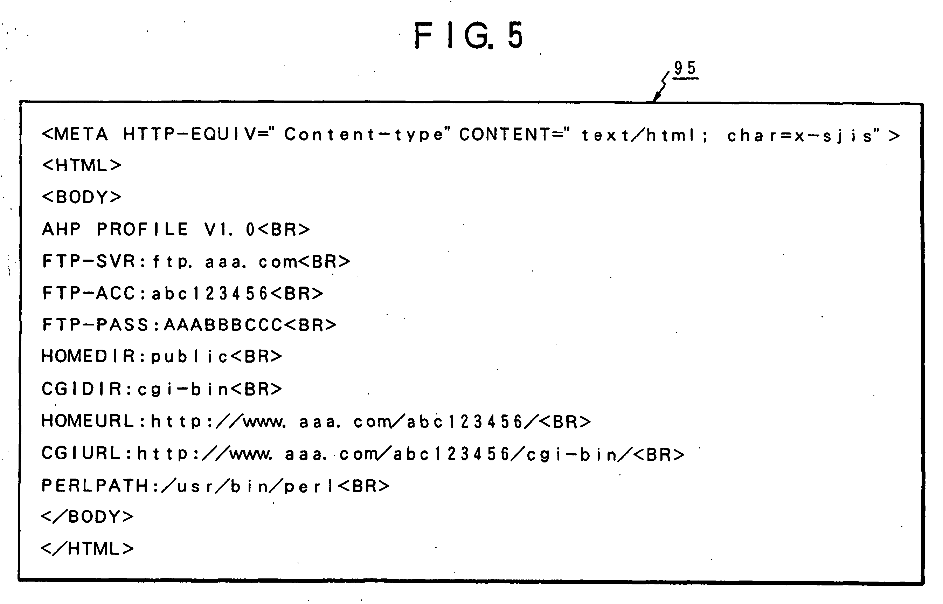

When the AUTO GET button 64 is operated on the FTP property picture plane 62, the screen is switched to an FTP connection information obtaining picture plane 88 for displaying a message to promote the start of the automatic getting of the FTP connection information and the confirmation of the subscriber. In case of the subscriber of the provider which enables the processes of the invention to be executed, the automatic obtaining process is started by operating an OK button 89. Under a condition such that the user has been registered on the server 12 side, the obtaining request of the FTP connection information to the server 12 in step S4 in Figs. 3A and 3B and the transmitting process of the user ID and password in step S5 are executed via the Internet. In case of the other provider subscriber or in the case where the user wants to stop the automatic obtaining process, it is sufficient to operate a CANCEL button. Subsequently, the screen is switched to an FTP connection information obtaining execution picture plane 90. After the dial-up connection was executed, the server 12 is requested to obtain the FTP connection information in accordance with the https protocol and the user ID (account name) and password are transmitted. Subsequently, the screen is switched to an FTP connection information obtaining picture plane 92. In this picture plane state, the user information necessary for setting the FTP connection information is obtained from the server. By pressing an OK button 94, the processes are finished and the screen is switched to the display of the FTP property picture plane 62. By clicking the DETAILS SET button 66 on the FTP property picture plane 62, the information obtained by processes similar to those mentioned above is set and an FTP details setting picture plane 96 is displayed. On the basis of the information obtained from the server, an FTP server name 72, an FTP account name 74, an FTP password 76, a homepage URL 78, a homepage folder name 80, further, a path 82 of perl, a self-creation CGIURL 84, and a self-creation CGI folder 86 are set on the FTP details setting picture plane 96. The path 82 of perl is an input of a path of perl (program language for CGI process) necessary for executing CGI (Common Gateway Interface) by the FTP server. The self-creation CGIURL 84 inputs URL of CGI which is formed by the user. Further, the CGI folder 86 inputs a folder in which the CGI file of the user is put on the FTP server. The set information displayed on the FTP details setting picture plane 96 is extracted from a notice information 95 as a result of the FTP automatic obtaining from the server 12 shown in Fig. 5 and set.

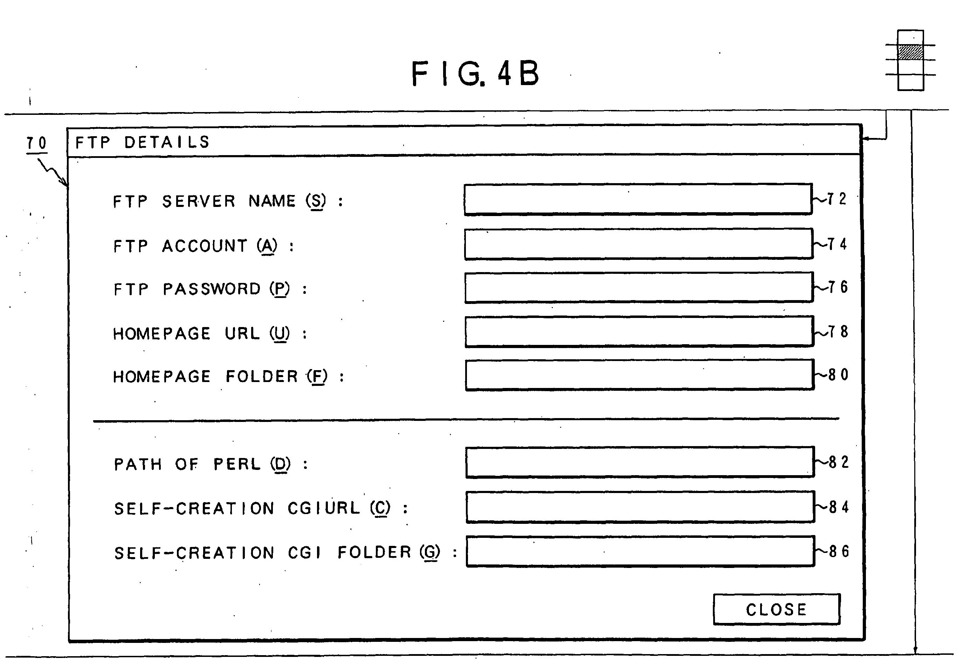

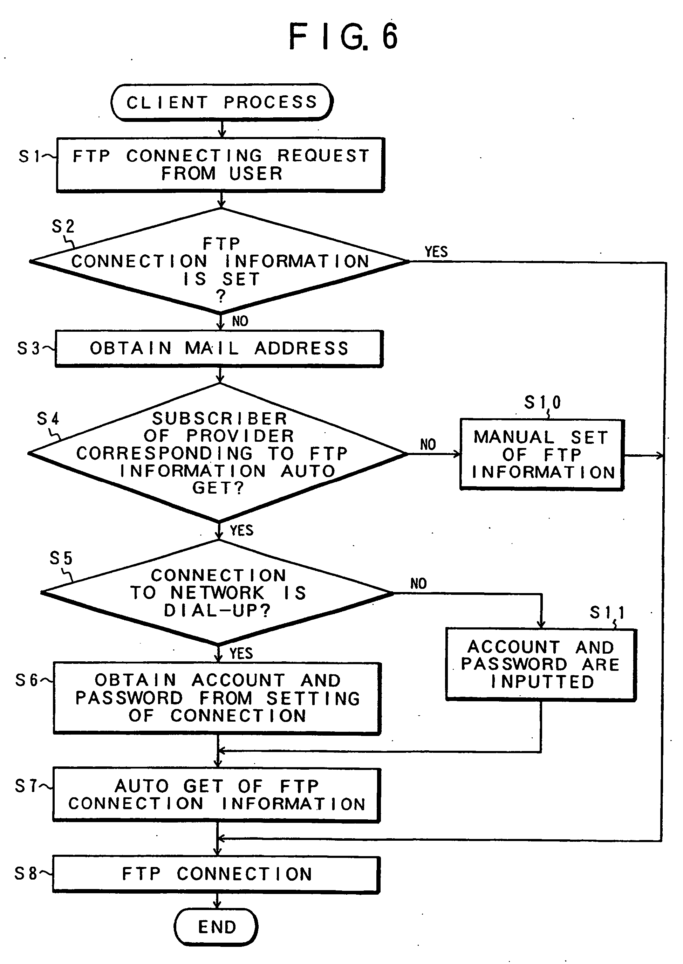

Fig. 6 is a flowchart showing the processing operation of the set information obtaining unit 22 provided for the client 10 in the network system in Fig. 1. In step S1, when the FTP connecting request from the user is received by the public file designating unit 20 or the like, whether the FTP connection information has been set in the FTP processing unit 18 or not is discriminated in step S2.
If it is not set, step S3 follows. The mail address set in the Email processing unit 26 is obtained and whether the client is the subscriber of the provider on the server 12 side corresponding to the FTP information automatic obtaining or not is discriminated from the mail address in step S4. If he is the subscriber registered as a user in the server 12, step S5 follows. Whether the connection to the network is the dial-up connection or the LAN connection is discriminated. If it is the dial-up connection, step S6 follows. The account name and password are obtained from the setting input of the dial-up connection. The FTP connection information is automatically obtained in step S7. That is, as shown in steps S4 and S5 in Figs. 3A and 3B, the server 12 is requested to obtain the FTP connection information, the user ID and password are transmitted, and the information requested from the server 12 is automatically obtained and set to the FTP connection information. When the setting by the automatic obtaining of the FTP connection information is finished as mentioned above, the FTP connection is made in step S8 and the file to be publicized on the homepage is transferred from the client to the server. The series of client processes is finished. If the FTP connection information has already been set in step S2, the FTP connection is made in step S8 and the file is transferred from the client 10 to the server 12. As a result of obtaining and analyzing the mail address, if the client is not the subscriber registered in the provider which manages the server corresponding to the FTP information automatic obtaining in step S4, the FTP information is manually set in step S10. In the manual setting of the FTP information, specifically speaking, by operating the DETAILS SET button 66 on the FTP property picture plane 62 in Figs. 4A and 4B, the next FTP detailed setting picture plane 70 is opened and the user manually enters the necessary connection information thereto. Further, if the connection to the network is not the dial-up connection but the LAN connection in step S5, step S11 follows. The user enters the account name and password to the LAN connecting picture plane, so that the processing routine advances to step S7. The FTP connection information is automatically obtained by using those input information. The file transfer by the FTP connection is performed in step S8.

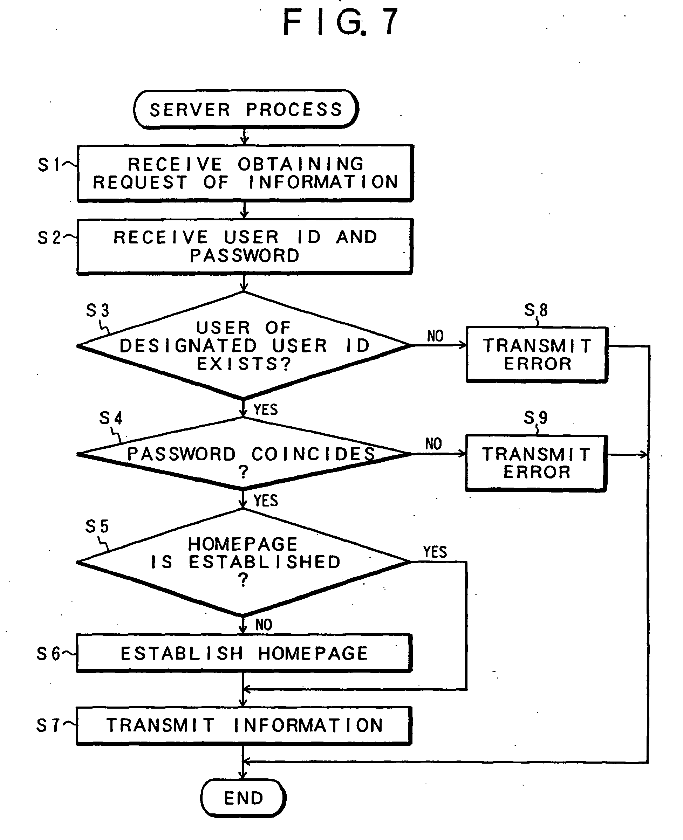

Fig. 7 is a flowchart showing the processing operation of the set information providing unit 34 provided for the server 12 in the network system of Fig. 1. When the request for obtaining the information is received from the client 10 in step S1, the user ID and password are received in step S2. Whether the user of the designated user ID exists or not is discriminated with reference to the user information registering unit 36 in step S3. If it is determined that the user of the designated user ID exists, step S4 follows and whether the password coincides or not is discriminated. If the password coincides, whether the user who requested to obtain the information has established the homepage or not is discriminated in step S5. If he does not establish the homepage yet, step S6 follows and the homepage is automatically established. If he already has established the homepage, the process in step S6 is skipped. Finally, the FTP connection information is transmitted to the client in step S7. If the user of the designated user ID does not exist in step S3, an error is transmitted in step S8. An error is transmitted in step S9 even in the case where the password does not coincide in step S4.

Each of the client 10 and server 12 for executing the processes of the invention described above uses a well-known hardware construction of the computer. That is, a CPU, a main storage device (RAM), an auxiliary storage device (hard disk or other external storage devices), and a communication control apparatus such as modem, LAN card, etc. are provided as main component elements and connected by a system bus so as to enable information to be transmitted and received between the component elements. In the client 10, a display is connected to the computer, a picture plane is displayed, input devices such as mouse, keyboard, and the like are connected, and the user operation for the picture plane displayed on the display is executed. In the server 12, the display and keyboard are not the indispensable components. In order to install the program of the invention recorded in a portable recording medium such as CD-ROM, floppy disk, or the like into the computer or in order to directly execute such a program, the client 10 and server 12 can be equipped with drives which correspond to the recording medium and are used for reading out the information from the portable recording medium. Further, it is also possible to obtain the program of the invention by a method whereby the program is recorded into a recording medium of another apparatus which is connected through the network and it is downloaded and obtained by using a communication control apparatus and stored in an auxiliary storage device or main storage device of the self apparatus. In the foregoing computer construction, the program of the invention recorded in the auxiliary storage device, portable recording medium, or another apparatus receives an instruction to execute or is downloaded from another apparatus and developed in the main storage device. By allowing the CPU to execute the processes of the invention, the client 10 and server 12 are made operative as each of the processing units which have already been described.

According to the invention as mentioned above, the client requests for the connection information from the server by the information obtaining request using the user ID information and the connection information which is received is set as its response, so that the connection information necessary for connecting from the client to the server can be automatically set. The file can be transferred to the homepage area or the like and simply and easily publicized. It is, particularly, troublesome for the user to obtain the information necessary for connecting the client to the server. When the obtained information is set and inputted, if an erroneous input is performed, troublesomeness occurs and time is required. According to the invention, however, the process regarding the setting of the information necessary for connecting to the server is substantially unnecessary. The file can be extremely simply and easily transferred from the client to the homepage area or the like of the server and publicized.

The invention is not limited to the foregoing embodiment but incorporates many modifications and variations without losing the objects and advantages of the invention. The invention is not limited by the numerical values shown in the above embodiment.

## Claims

1. A network system constructed by a client (10) and a server (12) comprising:
a file designating unit (20) which is provided for said client, for designating a file by a user's transmitting operation to transmit said file to said server;
a set information obtaining unit (22) which is provided for said client, for requesting a connection information to said server by an information obtaining request using
user identification information, including a user ID and a password, and for setting the connection information which is received as its response;
a transfer processing unit (18) which is provided in said client for transferring said file to said server on the basis of said connection information;
a set information providing unit (34) which is provided for said server for transmitting said connection information which is obtained by using said user identification information received from said client to said client; **characterised in that** said connection information is used to transfer said file from said client to said server by FTP.

2. A network system according to claim 1, wherein said connection information is information which is used when a file is transferred from said client (10) to said server (12), and said connection information includes a server name, an account, a password, a homepage URL, and a homepage folder name.

3. A system according to claim 1, wherein said set information obtaining unit (22) is adapted for obtaining the user identification information which is used for said information obtaining request (S4) from a setting input of the dial-up connection in the case where a connection to a network is a dial-up connection.

4. A system according to claim 1, wherein said set information obtaining unit (22) is adapted for using the user identification information which is input from the user for said information obtaining request (S4) in the case where a connection to the network is other than a dial-up connection.

5. A system according to claim 1, wherein said set information obtaining unit (22) is adapted for issuing the information obtaining request (S4) using said user identification information after a fact that the client (10) is a registered user of said server (12) was recognized from a set mail address.

6. A system according to claim 1, wherein said server (12) is adapted for providing an establishing service of a homepage and for performing an establishing process of the homepage by using said user identification information when the information obtaining request (S4) from said client (10) is received and for transmitting requested information to said client (10) thereafter.

7. A system according to claim 6, wherein said server (12) is adapted for performing said establishing process in the case where a homepage corresponding to the user who is specified by said user identification information is not established yet, when the information obtaining request (S4) is received from said client (10).

8. A system according to claim 6 or 7, wherein said homepage establishing service is provided to the registered user.

9. A system according to claim 1, wherein the obtaining request (S4) of said connection information and its response between said set information obtaining unit (22) of said client (10) and said connection information providing unit (34) of said server (12) are processed by a protocol having a security function.

10. A client (10) which is connectable to a server (12) through a network, comprising:
a file designating unit (20) for designating a file by a user's transmitting operation to transmit said file to server;
a set information obtaining unit (22) for requesting connection information to said server by an information obtaining request using user identification information, including a user ID and a password, and for setting the connection information which is received as its response;
a transfer processing unit (18) for transferring said file to said server on the basis of said connection information;
**characterised in that** said connection information is used to transfer said file from said client to said server by FTP.

11. A client according to claim 10, wherein said connection information is information which is used when a file is transferred from said client (10) to said server (12); and said connection information includes a server name, an account, a password, a homepage URL and a homepage folder name.

12. A client according to claim 10, wherein said set information obtaining unit (22) is adapted for obtaining the user identification information which is used for said information obtaining request from a setting input of the dial-up connection in the case where a connection to a network is a dial-up connection.

13. A client according to claim 10, wherein said set information obtaining unit (22) is adapted for using the user identification information which is input from the user for said information obtaining request (S4) in the case where a connection to the network is other than a dial-up connection.

14. A client according to claim 10, wherein said set information obtaining unit (22) is adapted for issuing the information obtaining request (S4) using said user identification information after a fact that the client (10) is a registered user of said server (12) is recognized from a set mail address.

15. A client according to claim 10, wherein said user identification information is constructed by an account name and a password.

16. A servers (12) which is connectable to a client (10) through a network, comprising:
a set information providing unit (34) for receiving an information obtaining request from said client and for transmitting a connection information which is obtained by using received user identification information including an account name and a password;
**characterised in that** said connection information is used to transfer a file from said client to said server by FTP.

17. A server according to claim 16, wherein said connection information is information which is used when a file is transferred from said client (10); and said connection information includes a server name, an account, a password, a homepage URL, and a homepage folder name.

18. A server according to claim 16, wherein said server comprises means for performing an establishing process of the homepage by using said user identification information when the information obtaining request (S4) from said client (10) is received and, thereafter, for transmitting requested information to said client (10).

19. A server according to claim 18, wherein said server comprises means for performing said establishing process in the case where a homepage corresponding to the user who is specified by said user identification information is not established yet when the information obtaining request is received from said client (10).

20. A server according to claim 16, wherein said homepage establishing service is provided to the registered user.

21. A server according to claim 16, wherein said set information providing unit (34) is adapted for processing the reception of said obtaining request (S4) from said client (10) and the transmission of said connection information to said client (10) by a protocol having a security function.

22. A recording medium which stores program which is executed by a computer that is connectable to a server (12) through a network, wherein said program comprises the steps of:
designating a file by a user's transmitting operation;
requesting connection information to said server by an information obtaining request using user identification information including a user ID and a password;
obtaining said connection information which is received from said server as its response; and
transferring said file to said server on the basis of said connection information;
**characterised in that** said connection information is used to transfer said file to said server by FTP.

23. A medium according to claim 22, wherein said connection information is information which is used when a file is transferred to said server (12); and said connection information includes a server name, an account a password, a homepacre URL, and a homepacre folder name.

24. A medium according to claim 22, wherein in the case where said computer uses a dial-up connection for a connection to the network, the user identification information which is used for said information obtaining request is obtained from a setting input of said dial-up connection.

25. A medium according to claim 22, wherein in the case where said computer uses a connection other than a dial-up connection for the connection to said network, the user identification information which is input from the user is used for said information obtaining request (S4).

26. A medium according to claim 22, wherein after a fact that a client (10) is a registered user of said server (12) was recognized from a set mail address, the information obtaining request using said user identification information is performed.

27. A medium according to claim 22, wherein said user identification information is constructed by an account name and a password.

28. A recording medium which stores a program which is executed by a computer that is connectable to a client (10) through a network, wherein said program comprises the steps of:
receiving an information obtaining request from said client;
receiving a user identification information including an account name and a password from said client;
transmitting a connection information which is obtained by using said user identification information;
**characterised in that** said connection information is used to transfer a file from said client to said server by FTP.

29. A medium according to claim 28, wherein said connection information is information which is used when a file is transferred from said client (10); and said connection information includes a server name, an account, a password, a homepage URL, and a homepage folder name.

30. A medium according to claim 28, wherein said program further comprises the steps of:
providing an establishing service of a homepage by said computer;
performing an establishing process of the homepage by using said user identification information when said information obtaining request is received from said client (10); and
transmitting requested information to said client (10).

31. A medium according to claim 30, wherein when the information obtaining request (S4) is received from said client (10), said establishing process is performed in the case where a homepage corresponding to the user who is specified by said user identification information is not established yet.

32. A medium according to claim 30, wherein said homepage establishing service is provided to the registered user.

33. A medium according to claim 28, wherein the reception of said obtaining request (S4) from said client (10) and the transmission of said connection information to said client (10) are processed by a protocol having a security function.

34. A medium according to claim 28, wherein said user identification information is constructed by an account name and a password.

35. A processing method of a client (10) which is connectable to a server (12) through a network, comprising the steps of:
designating a file by a user's transmitting operation;
requesting connection information to said server by an information obtaining request using user identification information including a user ID and a password;
obtaining said connection information which is received from said server as its response;
transferring said file to said server on the basis of said connection information;
**characterised in that** said connection information is used to transfer said file from said client to said server by FTP.

36. A method according to claim 35, wherein said connection information is information which is used when a file is transferred to said server (12), and said connection information includes a server name, an account a password, a homepage URL, and a homepage folder name.

37. A method according to claim 35, wherein in the case where said computer uses a dial-up connection for a connection to the network, the user identification information which is used for said information obtaining request is obtained from a setting input of said dial-up connection.

38. A method according to claim 35, wherein in the case where said computer uses a connection other than a dial-up connection for the connection to said network, the user identification information which is input from the user is used for said information obtaining request.

39. A method according to claim 35, wherein after a fact that a client (10) is a registered user of said server (12) was recognized from a set mail address, the information obtaining request (S4) using said user identification information is performed.

40. A method according to claim 35, wherein said obtaining request to said server (12) and the reception of said connection information from said server (12) are processed by a protocol having a security function.

41. A processing method of a server (12) which is connectable to a client (10) through a network, comprising the steps of:
receiving an information obtaining request from said client;
receiving a user identification information including an account name and a password from said client;
transmitting a connection information which is obtained by using said user identification information;
**characterised in that** said connection information is used to transfer a file from said client to said server by FTP.

42. A method according to claim 41, wherein said connection information is information which is used when a file is transferred from said client (10); and said connection information includes a server name, an account, a password, a homepage URL, and a homepage folder name.

43. A method according to claim 41, wherein said program further comprises the steps of:
providing an establishing service of a homepage;
performing an establishing process of the homepage by using said user identification information when said information obtaining request (S4) is received from said client (10); and
transmitting requested information to said client (10).

44. A method according to claim 43, wherein when the information obtaining request (S4) is received from said client (10), said establishing process is performed in the case where a homepage corresponding to the user who is specified by said user identification information is not established yet.

45. A method according to claim 43, wherein said homepage establishing service is provided to the registered user.

46. A method according to claim 41, wherein the reception of said obtaining request (S4) from said client (10) and the transmission of said connection information to said client (10) are processed by a protocol having a security function.

47. A method according to claim 41, wherein said user identification information is constructed by an account name and a password.

## Patentansprüche

1. Netzwerksystem, welches aus einem Klienten (10) und einem Server (12) besteht, welches aufweist:
eine Dateibestimmungseinheit (20), welche für den Klienten bereitgestellt ist, um eine Datei durch einen Übertragungsbetrieb eines Benutzers zu bestimmen, um die Datei zum Server zu übertragen;
eine Setzinformations-Erlangungseinheit (22), welche für den Klienten bereitgestellt ist, um eine Verbindungsinformation zum Server durch eine Informationserlangungsanforderung unter Verwendung einer Benutzeridentifikationsinformation anzufordern, die eine Benutzer-ID und ein Passwort aufweist, und um die Verbindungsinformation zu setzen, welche als dessen Antwort empfangen wird;
eine Übertragungsverarbeitungseinheit (18), welche im Klienten vorgesehen ist, um die Datei zum Server auf Basis der Verbindungsinformation zu übertragen;
eine Setzinformations-Bereitstellungseinheit (34), welche für den Server vorgesehen ist, um die Verbindungsinformation, welche unter Verwendung der Benutzeridentifikation erlangt wird, welche vom Klienten empfangen wird, zum Klienten zu übertragen;
**dadurch gekennzeichnet, dass** die Verbindungsinformation verwendet wird, die Datei vom Klienten zum Server durch FTP zu übertragen.

2. Netzwerksystem nach Anspruch 1, wobei die Verbindungsinformation Information ist, welche verwendet wird, wenn eine Datei vom Klienten (10) zum Server (12) übertragen wird, und die Verbindungsinformation einen Servernamen, einen Kontierungscode, ein Passwort, einen Homepage-URL und einen Homepage-Ordnername aufweist.

3. System nach Anspruch 1, wobei die Setzinformations-Erlangungseinheit angepasst ist, die Benutzeridentifikationsinformation, welche für die Informationserlangungsanforderung (S4) verwendet wird, von einer Setzeinheit der Wählverbindung in dem Fall zu erlangen, wo eine Verbindung zu einem Netzwerk eine Wählverbindung ist.

4. System nach Anspruch 1, wobei die Setzinformations-Erlangungseinheit (22) zur Verwendung der Benutzeridentifikationsinformation angepasst ist, welche vom Benutzer für die Informationserlangungsanforderung (S4) zugeführt wird, in dem Fall, wo eine Verbindung zum Netzwerk abweichend von einer Wählverbindung ist.

5. System nach Anspruch 1, wobei die Setzinformations-Erlangungseinheit (22) angepasst ist, die Informationserlangungsanforderung (S4) unter Verwendung der Benutzeridentifikationsinformation auszugeben, nachdem eine Tatsache, dass der Klient (10) ein registrierter Benutzer des Servers (12) ist, von einer gesetzten Mail-Adresse erkannt wurde.

6. System nach Anspruch 1, wobei der Server (12) angepasst ist, um einen Einrichtungsdienst einer Homepage bereitzustellen und einen Einrichtungsprozess der Homepage unter Verwendung der Benutzeridentifikationsinformation durchzuführen, wenn die Informationserlangungsanforderung (S4) vom Klienten (10) empfangen wurde, und um die angeforderte Information anschließend zum Klienten (10) zu übertragen.

7. System nach Anspruch 6, wobei der Server (12) angepasst ist, um den Einrichtungsprozess in dem Fall durchzuführen, wo eine Homepage entsprechend dem Benutzer, welche durch die Benutzeridentifikationsinformation spezifiziert wird, noch nicht eingerichtet ist, wenn die Informationserlangungsanforderung (S4) vom Klienten (10) empfangen wird.

8. System nach Anspruch 6 oder 7, wobei der Homepage-Einrichtungsdienst dem registrierten Benutzer bereitgestellt wird.

9. System nach Anspruch 1, wobei die Erlangungsanforderung (S4) der Verbindungsinformation und deren Antwort zwischen der Setzinformations-Erlangungseinheit (22) des Klienten (10) und der Verbindungsinformations-Bereitstellungseinheit (34) des Servers (12) durch ein Protokoll, welches eine Sicherheitsfunktion hat, verarbeitet werden.

10. Klient (10), der mit einem Server (12) über ein Netzwerk verbindbar ist, der aufweist:
eine Dateibestimmungseinheit (20), um eine Datei durch eine Übertragungsoperation eines Benutzers zu bestimmen, um die Datei zum Server zu übertragen; eine Setzinformations-Erlangungseinheit (22) zum Anfordern von Verbindungsinformation für den Server durch eine Informationserlangungsanforderung unter Verwendung von Benutzeridentifikationsinformation, die eine Benutzer-ID und ein Passwort aufweist, und zum Setzen der Verbindungsinformation, welche als dessen Antwort empfangen wird; eine Übertragungsverarbeitungseinheit (18) zum Übertragen der Datei zum Server auf Basis der Verbindungsinformation; **dadurch gekennzeichnet, dass** die Verbindungsinformation verwendet wird, die Datei vom Klienten zum Server durch FTP zu übertragen.

11. Klient nach Anspruch 10, wobei die Verbindungsinformation Information ist, welche verwendet wird, wenn eine Datei vom Klienten (10) zum Server (12) übertragen wird; und die Verbindungsinformation einen Servernamen, einen Kontierungscode, ein Passwort, einen Homepage-URL und einen Homepage-Ordnernamen aufweist.

12. Klient nach Anspruch 10, wobei die Setzinformations-Erlangungseinheit (22) angepasst ist, um die Benutzeridentifikationsinformation, welche für die Informationserlangungsanforderung verwendet wird, von der Setzeinheit der Wählverbindung in dem Fall zu erlangen, wo eine Verbindung mit dem Netzwerk eine Wählverbindung ist.

13. Klient nach Anspruch 10, wobei die Setzinformations-Erlangungseinheit (22) zur Verwendung der Benutzeridentifikationsinformation angepasst ist, welche vom Benutzer für die Informationserlangungsanforderung (S4) in dem Fall zugeführt wird, wo eine Kommunikation zum Netzwerk abweichend von einer Wählverbindung ist.

14. Klient nach Anspruch 10, wobei die Setzinformations-Erlangungseinheit (22) angepasst ist, um die Informationserlangungsanforderung (S4) unter Verwendung der Benutzeridentifikationsinformation auszugeben, nachdem eine Tatsache, dass der Klient (10) ein registrierter Benutzer des Servers (12) ist, von einer gesetzten Mail-Adresse erkannt wird.

15. Klient nach Anspruch 10, wobei die Benutzeridentifikationsinformation aus einem Kontierungscodenamen und einem Passwort besteht.

16. Server (12), der mit einem Klienten (10) über ein Netzwerk verbindbar ist, der aufweist:
eine Setzinformations-Bereitstellungseinheit (34) zum Empfangen einer Informationserlangungsanforderung vom Klienten und zum Übertragen einer Verbindungsinformation, welche unter Verwendung empfangener Benutzeridentifikationsinformation erlangt wird, die einen Kontierungscodenamen und ein Passwort aufweist;
**dadurch gekennzeichnet, dass** die Verbindungsinformation verwendet wird, eine Datei vom Klienten zum Server durch FTP zu übertragen.

17. Server nach Anspruch 16, wobei die Verbindungsinformation Information ist, die verwendet wird, wenn eine Datei vom Klienten (10) übertragen wird; und die Verbindungsinformation einen Servernamen, einen Kontierungscode, ein Passwort, einen Homepage-URL und einen Homepage-Ordnernamen aufweist.

18. Server nach Anspruch 16, wobei der Server eine Einrichtung zum Durchführen eines Einrichtungsprozesses der Homepage unter Verwendung der Benutzeridentifikationsinformation aufweist, wenn die Informationserlangungsanforderung (S4) vom Klienten (10) empfangen wird, und anschließend die Übertragungsanforderungsinformation zum Klienten (10) übertragen wird.

19. Server nach Anspruch 18, wobei der Server eine Einrichtung zum Durchführen des Einrichtungsprozesses in dem Fall aufweist, wo eine Homepage entsprechend dem Benutzer, der durch die Benutzeridentifikationsinformation spezifiziert wird, noch nicht eingerichtet ist, wenn die Informationserlangungsanforderung vom Klienten (10) empfangen wird.

20. Server nach Anspruch 16, wobei der Homepage-Einrichtungsdienst dem registrierten Benutzer bereitgestellt wird.

21. Server nach Anspruch 16, wobei die Setzinformations-Bereitstellungseinheit (34) angepasst ist, um den Empfang der erlangten Anforderung (S4) vom Klienten (10) und die Übertragung der Verbindungsinformation zum Klienten (10) durch ein Protokoll, welches eine Sicherheitsfunktion hat, zu verarbeiten.

22. Aufzeichnungsträger, der Programm speichert, welches durch einen Computer ausgeführt wird, der mit einem Server (12) über ein Netzwerk verbindbar ist, wobei das Programm folgende Schritte aufweist:
Bestimmen einer Datei durch eine Übertragungsoperation eines Benutzers;
Anfordern von Verbindungsinformation zum Server durch eine Informationserlangungsanforderung unter Verwendung einer Benutzeridentifikationsinformation einschließlich einer Benutzer-ID und eines Passworts;
Erlangen der Verbindungsinformation, welche vom Server empfangen wird, als dessen Antwort; und
Übertragen der Datei zum Server auf Basis der Verbindungsinformation;
**dadurch gekennzeichnet, dass** die Verbindungsinformation verwendet wird, die Datei zum Server durch FTP zu übertragen.

23. Träger nach Anspruch 22, wobei die Verbindungsinformation Information ist, welche verwendet wird, wenn eine Datei zum Server (12) übertragen wird; und die Verbindungsinformation einen Servernamen, einen Kontierungscode, ein Passwort, einen Homepage-URL und einen Homepage-Ordnernamen aufweist.

24. Träger nach Anspruch 22, wobei in dem Fall, wo der Computer eine Wählverbindung für eine Verbindung zum Netzwerk verwendet, die Benutzeridentifikationsinformation, welche für die Informationserlangungsanforderung verwendet wird, von einer Setzeinheit der Wählverbindung erlangt wird.

25. Träger nach Anspruch 22, wobei in dem Fall, wo der Computer eine Verbindung abweichend von einer Wählverbindung für die Verbindung zum Netzwerk verwendet, die Benutzeridentifikationsinformation, welche vom Benutzer eingegeben wird, für die Informationserlangungsanforderung (S4) verwendet wird.

26. Träger nach Anspruch 22, wobei, nachdem eine Tatsache, dass ein Klient (10) ein registrierter Benutzer des Servers (12) ist, von einer gesetzten Mail-Adresse erkannt wurde, die Informationserlangungsanforderung unter Verwendung der Benutzeridentifikationsinformation durchgeführt wird.

27. Träger nach Anspruch 22, wobei die Benutzeridentifikationsinformation aus einem Kontierungscodenamen und einem Passwort besteht.

28. Aufzeichnungsträger, der Programm speichert, welches durch einen Computer ausgeführt wird, der mit einem Klienten (10) über ein Netzwerk verbindbar ist, wobei das Programm folgende Schritte aufweist:
Empfangen einer Informationserlangungsanforderung vom Klienten;
Empfangen einer Benutzeridentifikationsinformation einschließlich eines Kontierungscodenamens und eines Passworts vom Klienten;
Übertragen einer Verbindungsinformation, welche unter Verwendung der Benutzeridentifikationsinformation erlangt wird;
**dadurch gekennzeichnet, dass** die Verbindungsinformation verwendet wird, um eine Datei vom Klienten zum Server durch FTP zu übertragen.

29. Träger nach Anspruch 28, wobei die Verbindungsinformation Information ist, welche verwendet wird, wenn eine Datei vom Klienten (10) übertragen wird; und die Verbindungsinformation eine Servernamen, einen Kontierungscode, ein Passwort, einen Homepage-URL und einen Homepage-Ordnernamen aufweist.

30. Träger nach Anspruch 28, wobei das Programm außerdem folgende Schritte aufweist:
Bereitstellen eines Einrichtungsdienstes einer Homepage durch den Computer;
Durchführen eines Einrichtungsprozesses durch den Computer;
Durchführen eines Einrichtungsprozesses der Homepage unter Verwendung der Benutzeridentifikationsinformation, wenn die Informationserlangungsanforderung vom Klienten (10) empfangen wird; und
Übertragen der angeforderten Information zum Klienten (10).

31. Träger nach Anspruch 30, wobei, wenn die Informationserlangungsanforderung (S4) vom Klienten (10) empfangen wird, der Einrichtungsprozess in dem Fall durchgeführt wird, wo eine Homepage entsprechend dem Benutzer, der durch die Benutzeridentifikationsinformation spezifiziert ist, noch nicht eingerichtet ist.

32. Träger nach Anspruch 30, wobei der Homepage-Einrichtungsdienst dem registrierten Benutzer bereitgestellt wird.

33. Träger nach Anspruch 28, wobei der Empfang der Erlangungsanforderung (S4) vom Klienten (10) und die Übertragung der Verbindungsinformation zum Klienten (10) durch ein Protokoll, welches eine Sicherheitsfunktion hat, verarbeitet werden.

34. Träger nach Anspruch 28, wobei die Benutzeridentifikationsinformation aus einem Kontierungscodenamen und einem Passwort besteht.

35. Verarbeitungsverfahren eines Klienten (10), der mit einem Server (12) über ein Netzwerk verbindbar ist, welches folgende Schritte aufweist:
Bestimmen einer Datei durch einen Übertragungsbetrieb des Benutzers;
Anfordern von Verbindungsinformation zum Server durch eine Informationserlangungsanforderung unter Verwendung einer Benutzeridentifikationsinformation einschließlich einer Benutzer-ID und eines Passworts;
Erlangen der Verbindungsinformation, welche vom Server empfangen wird, als dessen Antwort;
Übertragen der Datei zum Server auf Basis der Verbindungsinformation;
**dadurch gekennzeichnet, dass** die Verbindungsinformation verwendet wird, die Datei vom Klienten zum Server durch FTP zu übertragen.

36. Verfahren nach Anspruch 35, wobei die Verbindungsinformation Information ist, die verwendet wird, wenn eine Datei zum Server (12) übertragen wird, und die Verbindungsinformation einen Servernamen, einen Kontierungscode, ein Passwort, einen Homepage-URL und einen Homepage-Ordnernamen aufweist.

37. Verfahren nach Anspruch 35, wobei in dem Fall, wo der Computer eine Wählverbindung für eine Verbindung zum Netzwerk verwendet, die Benutzeridentifikationsinformation, welche für die Informationserlangungsanforderung verwendet wird, von einer Setzeingabe der Wählverbindung erlangt wird.

38. Verfahren nach Anspruch 35, wobei in dem Fall, wo der Computer eine Verbindung abweichend von einer Wählverbindung für die Verbindung zum Netzwerk verwendet, die Benutzeridentifikationsinformation, welche vom Benutzer eingegeben wird, für die Informationserlangungsanforderung verwendet wird.

39. Verfahren nach Anspruch 35, wobei, nachdem eine Tatsache, dass ein Klient (10) ein registrierter Benutzer des Servers (12) ist, von einer gesetzten Mail-Adresse erkannt wird, die Informationserlangungsanforderung (S4) unter Verwendung der Benutzeridentifikationsinformation durchgeführt wird.

40. Verfahren nach Anspruch 35, wobei die Erlangungsanforderung zum Server (12) und der Empfang der Verbindungsinformation vom Server (12) durch ein Protokoll, welches eine Sicherheitsfunktion hat, verarbeitet werden.

41. Verarbeitungsverfahren eines Servers (12), der mit einem Klienten (10) über ein Netzwerk verbindbar ist, welches folgende Schritte aufweist:
Empfangen einer Informationserlangungsanforderung vom Klienten;
Empfangen einer Benutzeridentifikationsinformation einschließlich eines Kontierungscodenamens und eines Passworts vom Klienten;
Übertragen einer Verbindungsinformation, welche unter Verwendung der Benutzeridentifikationsinformation erlangt wird;
**dadurch gekennzeichnet, dass** die Verbindungsinformation verwendet wird, um eine Datei vom Klienten zum Server durch FTP zu übertragen.

42. Verfahren nach Anspruch 41, wobei die Verbindungsinformation Information ist, welche verwendet wird, wenn eine Datei vom Klienten (10) übertragen wird; und die Verbindungsinformation einen Servernamen, einen Kontierungscode, ein Passwort, einen Homepage-URL und einen Homepage-Ordnernamen aufweist.

43. Verfahren nach Anspruch 41, wobei das Verfahren außerdem folgende Schritte aufweist:
Bereitstellen eines Einrichtungsdienstes einer Homepage;
Durchführen eines Einrichtungsprozesses der Homepage unter Verwendung der Benutzeridentifikationsinformation, wenn die Informationserlangungsanforderung (S4) vom Klienten (10) empfangen wird; und
Übertragen der angeforderten Information zum Klienten (10).

44. Verfahren nach Anspruch 43, wobei, wenn die Informationserlangungsanforderung (S4) vom Klienten (10) empfangen wird, der Einrichtungsprozess in dem Fall durchgeführt wird, wo eine Homepage entsprechend dem Benutzer, der durch die Benutzeridentifikationsinformation spezifiziert wird, noch nicht eingerichtet ist.

45. Verfahren nach Anspruch 43, wobei der Homepage-Einrichtungsdienst dem registrierten Benutzer bereitgestellt wird.

46. Verfahren nach Anspruch 41, wobei der Empfang der Erlangungsanforderung (S4) vom Klienten (10) und die Übertragung der Verbindungsinformation zum Klienten (10) durch ein Protokoll, welches eine Sicherheitsfunktion hat, verarbeitet werden.

47. Verfahren nach Anspruch 41, wobei die Benutzeridentifikationsinformation aus einem Kontierungscodenamen und einem Passwort besteht.

## Revendications

1. Système de réseau construit par un client (10) et un serveur (12) comprenant :
une unité de désignation de fichier (20) qui est fournie pour ledit client, destinée à désigner un fichier par une opération d'émission d'un utilisateur pour transmettre ledit fichier au dit serveur ;
une unité d'obtention d'informations définies (22) qui est fournie pour ledit client, destinée à demander des informations de connexion au dit serveur par une requête d'obtention d'informations à l'aide d'informations d'identification d'utilisateur, comprenant un ID utilisateur et un mot de passe, et destinée à définir les informations de connexion qui sont reçues au niveau de sa réponse ;
une unité de traitement de transfert (18) qui est fournie dans ledit client destinée à transférer ledit fichier au dit serveur en fonction desdites informations de connexion ;
une unité de fourniture d'informations définies (34) qui est fournie pour ledit serveur, destinée à émettre lesdites informations de connexion qui sont obtenues en utilisant lesdites informations d'identification d'utilisateur reçues en provenance dudit client vers ledit client ;
**caractérisé en ce que** lesdites informations de connexion sont utilisées pour transférer ledit fichier depuis ledit client vers ledit serveur par FTP.

2. Système de réseau selon la revendication 1, dans lequel lesdites informations de connexion sont des informations qui sont utilisées lorsqu'un fichier est transféré depuis ledit client (10) vers ledit serveur (12), et lesdites informations de connexion comprennent un nom de serveur, un compte, un mot de passe, une URL de page d'accueil, et un nom de dossier de page d'accueil.

3. Système selon la revendication 1, dans lequel ladite unité d'obtention d'informations définies (22) est adaptée pour obtenir les informations d'identification d'utilisateur qui sont utilisées pour ladite requête d'obtention d'informations (S4) provenant d'une entrée de paramétrage de la connexion par ligne commutée dans le cas où une connexion vers un réseau est une connexion par ligne commutée.

4. Système selon la revendication 1, dans lequel ladite unité d'obtention d'informations définies (22) est adaptée pour utiliser les informations d'identification d'utilisateur qui sont entrées depuis l'utilisateur pour ladite requête d'obtention d'informations (S4) dans le cas où une connexion au réseau est autre qu'une connexion par ligne commutée.

5. Système selon la revendication 1, dans lequel ladite unité d'obtention d'informations définies (22) est adaptée pour émettre la requête d'obtention d'informations (S4) à l'aide desdites informations d'identification d'utilisateur après qu'un fait que le client (10) est un utilisateur enregistré dudit serveur (12) a été reconnu à partir d'une adresse de courrier définie.

6. Système selon la revendication 1, dans lequel ledit serveur (12) est adapté pour fournir un service d'établissement d'une page d'accueil et pour réaliser un procédé d'établissement de la page d'accueil en utilisant lesdites informations d'identification d'utilisateur lorsque la requête d'obtention d'informations (S4) provenant dudit client (10) est reçue et pour transmettre les informations demandées au dit client (10) ensuite.

7. Système selon la revendication 6, dans lequel ledit serveur (12) est adapté pour réaliser ledit procédé d'établissement dans le cas où une page d'accueil correspondant à l'utilisateur qui est spécifié par lesdites informations d'identification d'utilisateur n'est pas encore établie, lorsque la requête d'obtention d'informations (S4) est reçue en provenance dudit client (10).

8. Système selon la revendication 6 ou 7, dans lequel ledit service d'établissement de page d'accueil est fourni à l'utilisateur enregistré.

9. Système selon la revendication 1, dans lequel la requête d'obtention (S4) desdites informations de connexion et sa réponse entre ladite unité d'obtention d'informations (22) dudit client (10) et ladite unité de fourniture d'informations de connexion (34) dudit serveur (12) sont traitées par un protocole ayant une fonction de sécurité.

10. Client (10) qui peut être connecté à un serveur (12) à travers un réseau, comprenant :
une unité de désignation de fichier (20) destinée à désigner un fichier par une opération d'émission d'un utilisateur pour transmettre ledit fichier au serveur ;
une unité d'obtention d'informations définies (22) destinée à demander des informations de connexion au dit serveur par une requête d'obtention d'informations à l'aide d'informations d'identification d'utilisateur, comprenant un ID utilisateur et un mot de passe, et destinée à définir les informations de connexion qui sont reçues au niveau de sa réponse ;
une unité de traitement de transfert (18) destinée à transférer ledit fichier au dit serveur en fonction desdites informations de connexion ;
**caractérisé en ce que** lesdites informations de connexion sont utilisées pour transférer ledit fichier depuis ledit client vers ledit serveur par FTP.

11. Client selon la revendication 10, dans lequel lesdites informations de connexion sont des informations qui sont utilisées lorsqu'un fichier est transféré depuis ledit client (10) vers ledit serveur (12), et lesdites informations de connexion comprennent un nom de serveur, un compte, un mot de passe, une URL de page d'accueil, et un nom de dossier de page d'accueil.

12. Client selon la revendication 10, dans lequel ladite unité d'obtention d'informations définies (22) est adaptée pour obtenir les informations d'identification d'utilisateur qui sont utilisées pour ladite requête d'obtention d'informations provenant d'une entrée de paramétrage de la connexion par ligne commutée dans le cas où une connexion vers un réseau est une connexion par ligne commutée.

13. Client selon la revendication 10, dans lequel ladite unité d'obtention d'informations définies (22) est adaptée pour utiliser les informations d'identification d'utilisateur qui sont entrées depuis l'utilisateur pour ladite requête d'obtention d'informations (S4) dans le cas où une connexion au réseau est autre qu'une connexion par ligne commutée.

14. Client selon la revendication 10, dans lequel ladite unité d'obtention d'informations définies (22) est adaptée pour émettre la requête d'obtention d'informations (S4) à l'aide desdites informations d'identification d'utilisateur après qu'un fait que le client (10) est un utilisateur enregistré dudit serveur (12) a été reconnu à partir d'une adresse de courrier définie.

15. Client selon la revendication 10, dans lequel lesdites informations d'identification d'uti lisateur sont construites par un nom de compte et un mot de passe.

16. Serveur (12) qui peut être connecté à un client (10) à travers un réseau, comprenant :
une unité de fourniture d'informations définies (34) destinée à recevoir une requête d'obtention d'informations en provenance dudit client et destinée à émettre des informations de connexion qui sont obtenues en utilisant lesdites informations d'identification d'utilisateur reçues comprenant un nom de compte et un mot de passe ;
**caractérisé en ce que** lesdites informations de connexion sont utilisées pour transférer ledit fichier depuis ledit client vers ledit serveur par FTP.

17. Serveur selon la revendication 16, dans lequel lesdites informations de connexion sont des informations qui sont utilisées lorsqu'un fichier est transféré depuis ledit client (10), et lesdites informations de connexion comprennent un nom de serveur, un compte, un mot de passe, une URL de page d'accueil, et un nom de dossier de page d'accueil.

18. Serveur selon la revendication 16, dans lequel ledit serveur comprend des moyens destinés à réaliser un procédé d'établissement de la page d'accueil en utilisant lesdites informations d'identification d'utilisateur lorsque la requête d'obtention d'informations (S4) provenant dudit client (10) est reçue et, ensuite, pour transmettre les informations demandées au dit client (10).

19. Serveur selon la revendication 18, dans lequel ledit serveur comprend des moyens destinés à réaliser ledit procédé d'établissement dans le cas où une page d'accueil correspondant à l'utilisateur qui est spécifié par lesdites informations d'identification d'utilisateur n'est pas encore établie, lorsque la requête d'obtention d'informations (S4) est reçue en provenance dudit client (10).

20. Serveur selon la revendication 16, dans lequel ledit service d'établissement de page d'accueil est fourni à l'utilisateur enregistré.

21. Serveur selon la revendication 16, dans lequel ladite unité de fourniture d'informations définies (34) est adaptée pour traiter la réception de ladite requête d'obtention (S4) provenant dudit client (10) et la transmission desdites informations de connexion vers ledit client (10) par un protocole ayant une fonction de sécurité.

22. Support d'enregistrement qui stocke un programme qui est exécuté par un ordinateur qui peut être connecté à un serveur (12) à travers un réseau, dans lequel ledit programme comprend les étapes consistant à :
désigner un fichier par une opération d'émission d'un utilisateur ;
demander des informations de connexion au dit serveur par une requête d'obtention d'informations à l'aide des informations d'identification d'utilisateur comprenant un ID utilisateur et un mot de passe ;
obtenir lesdites informations qui sont reçues en provenance dudit serveur comme sa réponse ; et
transférer ledit fichier vers ledit serveur en fonction desdites informations de connexion ;
**caractérisé en ce que** lesdites informations de connexion sont utilisées pour transférer ledit fichier vers ledit serveur par FTP.

23. Support selon la revendication 22, dans lequel lesdites informations de connexion sont des informations qui sont utilisées lorsqu'un fichier est transféré vers ledit serveur (12), et lesdites informations de connexion comprennent un nom de serveur, un compte, un mot de passe, une URL de page d'accueil, et un nom de dossier de page d'accueil.

24. Support selon la revendication 22, dans lequel dans le cas où ledit ordinateur utilise une connexion par ligne commutée pour une connexion au réseau, les informations d'identification d'utilisateur qui sont utilisées pour ladite requête d'obtention d'informations sont obtenues en provenant d'une entrée de paramétrage de ladite connexion par ligne commutée.

25. Support selon la revendication 22, dans lequel dans le cas où ledit ordinateur utilise une connexion autre qu'une connexion par ligne commutée pour la connexion au dit réseau, les informations d'identification d'utilisateur qui sont entrées en provenance de l'utilisateur sont utilisées pour ladite requête d'obtention d'informations (S4).

26. Support selon la revendication 22, dans lequel après qu'un fait qu'un client (10) est un utilisateur enregistré dudit serveur (12) est reconnu à partir d'une adresse de courrier définie, la requête d'obtention d'informations utilisant lesdites informations d'identification d'utilisateur est réalisée.

27. Support selon la revendication 22, dans lequel lesdites informations d'identification d'utilisateur sont construites par un nom de compte et un mot de passe.

28. Support d'enregistrement qui stocke un programme qui est exécuté par un ordinateur qui peut être connecté à un client (10) à travers un réseau, dans lequel ledit programme comprend les étapes consistant à :
recevoir une requête d'obtention d'informations en provenance dudit client ;
recevoir des informations d'identification d'utilisateur comprenant un nom de compte et un mot de passe en provenance dudit client ;
émettre des informations de connexion qui sont obtenues en utilisant lesdites informations d'identification d'utilisateur ;
**caractérisé en ce que** lesdites informations de connexion sont utilisées pour transférer un fichier depuis ledit client vers ledit serveur par FTP.

29. Support selon la revendication 28, dans lequel lesdites informations de connexion sont des informations qui sont utilisées lorsqu'un fichier est transféré depuis ledit client (10), et lesdites informations de connexion comprennent un nom de serveur, un compte, un mot de passe, une URL de page d'accueil, et un nom de dossier de page d'accueil.

30. Support selon la revendication 28, dans lequel ledit programme comprend en outre les étapes consistant à :
fournir un service d'établissement d'une page d'accueil par ledit ordinateur ;
réaliser un procédé d'établissement de la page d'accueil en utilisant lesdites informations d'identification d'utilisateur lorsque ladite requête d'obtention d'informations est reçue en provenance dudit client (10) ; et
émettre lesdites informations demandées vers ledit client (10).

31. Support selon la revendication 30, dans lequel lorsque la requête d'obtention d'informations (S4) est reçue en provenance dudit client (10), ledit procédé d'établissement est réalisé dans le cas où une page d'accueil correspondant à l'utilisateur qui est spécifié par lesdites informations d'identification d'utilisateur n'est pas encore établie.

32. Support selon la revendication 30, dans lequel ledit service d'établissement de page d'accueil est fourni à l'utilisateur enregistré.

33. Support selon la revendication 28, dans lequel la réception de ladite requête d'obtention (S4) en provenance dudit client (10) et la transmission desdites informations de connexion vers ledit client (10) sont traitées par un protocole ayant une fonction de sécurité.

34. Support selon la revendication 28, dans lequel lesdites informations d'identification d'utilisateur sont construites par un nom de compte et un mot de passe.

35. Procédé de traitement d'un client (10) qui peut être connecté à un serveur (12) à travers un réseau, comprenant les étapes consistant à :
désigner un fichier par une opération d'émission d'un utilisateur ;
demander des informations de connexion au dit serveur par une requête d'obtention d'informations à l'aide des informations d'identification d'utilisateur comprenant un ID utilisateur et un mot de passe ;
obtenir lesdites informations qui sont reçues en provenance dudit serveur comme sa réponse ; et
transférer ledit fichier vers ledit serveur en fonction desdites informations de connexion ;
**caractérisé en ce que** lesdites informations de connexion sont utilisées pour transférer ledit fichier vers ledit serveur par FTP.

36. Procédé selon la revendication 35, dans lequel lesdites informations de connexion sont des informations qui sont utilisées lorsqu'un fichier est transféré vers ledit serveur (12), et lesdites informations de connexion comprennent un nom de serveur, un compte, un mot de passe, une URL de page d'accueil, et un nom de dossier de page d'accueil.

37. Procédé selon la revendication 35, dans lequel dans le cas où ledit ordinateur utilise une connexion par ligne commutée pour une connexion au réseau, les informations d'identification d'utilisateur qui sont utilisées pour ladite requête d'obtention d'informations sont obtenues en provenant d'une entrée de paramétrage de ladite connexion par ligne commutée.

38. Procédé selon la revendication 35, dans le cas où ledit ordinateur utilise une connexion autre qu'une connexion par ligne commutée pour la connexion au dit réseau, les informations d'identification d'utilisateur qui sont entrées en provenance de l'utilisateur sont utilisées pour ladite requête d'obtention d'informations.

39. Procédé selon la revendication 35, dans lequel après qu'un fait qu'un client (10) est un utilisateur enregistré dudit serveur (12) est reconnu à partir d'une adresse de courrier définie, la requête d'obtention d'informations (S4) utilisant lesdites informations d'identification d'utilisateur est réalisée.

40. Procédé selon la revendication 35, dans lequel ladite requête d'obtention vers ledit serveur (12) et la réception desdites informations de connexion en provenance dudit serveur (12) sont traitées par un protocole ayant une fonction de sécurité.

41. Procédé de traitement d'un serveur (12) qui peut être connecté à un client (10) à travers un réseau, comprenant les étapes consistant à :
recevoir une requête d'obtention d'informations en provenance dudit client ;
recevoir des informations d'identification d'utilisateur comprenant un nom de compte et un mot de passe en provenance dudit client ;
émettre des informations de connexion qui sont obtenues en utilisant lesdites informations d'identification d'utilisateur ;
**caractérisé en ce que** lesdites informations de connexion sont utilisées pour transférer un fichier depuis ledit client vers ledit serveur par FTP.

42. Procédé selon la revendication 41, dans lequel lesdites informations de connexion sont des informations qui sont utilisées lorsqu'un fichier est transféré depuis ledit client (10), et lesdites informations de connexion comprennent un nom de serveur, un compte, un mot de passe, une URL de page d'accueil, et un nom de dossier de page d'accueil.

43. Procédé selon la revendication 41, dans lequel ledit programme comprend en outre les étapes consistant à :
fournir un service d'établissement d'une page d'accueil ;
réaliser un procédé d'établissement de la page d'accueil en utilisant lesdites informations d'identification d'utilisateur lorsque ladite requête d'obtention d'informations (S4) est reçue en provenance dudit client (10) ; et
émettre lesdites informations demandées vers ledit client (10).

44. Procédé selon la revendication 43, dans lequel lorsque la requête d'obtention d'informations (S4) est reçue en provenance dudit client (10), ledit procédé d'établissement est réalisé dans le cas où une page d'accueil correspondant à l'utilisateur qui est spécifié par lesdites informations d'identification d'utilisateur n'est pas encore établie.

45. Procédé selon la revendication 43, dans lequel ledit service d'établissement de page d'accueil est fourni à l'utilisateur enregistré.

46. Procédé selon la revendication 41, dans lequel la réception de ladite requête d'obtention (S4) en provenance dudit client (10) et la transmission desdites informations de connexion vers ledit client (10) sont traitées par un protocole ayant une fonction de sécurité.

47. Procédé selon la revendication 41, dans lequel lesdites informations d'identification d'utilisateur sont construites par un nom de compte et un mot de passe.
